# EUROPÄISCHE PATENTSCHRIFT

(11) **EP 0 391 066 B1**
(45) Veröffentlichungstag und Bekanntmachung des Hinweises auf die Patenterteilung: **21.07.1993**
(21) Anmeldenummer: 90103957.8
(22) Anmeldetag: 01.03.1990
(51) Int. Cl.: F16F 6/00, F16F 15/03, B60G 15/00, B60G 17/02

(54) **Federungssystem für Fahrzeuge**
Suspension system for vehicles
Système de suspension pour véhicules

(30) Priorität: 06.04.1989 DE 3911131
(43) Veröffentlichungstag der Anmeldung: 10.10.1990
(73) Patentinhaber: Scharf, Friedrich, Dr., D-91555 Feuchtwangen (DE); Schnaidt, Wilfried, D-70839 Gerlingen (DE); Kragl, Willi, D-70839 Gerlingen (DE)
(72) Erfinder: Scharf, Friedrich, Dr., Dipl.-Phys., W-8805 Feuchtwangen (DE); Kragl, Willi, Dipl.-Ing. (FH), D-7016 Gerlingen (DE); Schnaidt, Wilfried, D-7016 Gerlingen (DE); Prerauer, Rudolf, D-7016 Gerlingen (DE)

(56) Entgegenhaltungen:
- DE-A- 1 805 789
- DE-A- 3 306 180
- DE-C- 3 410 473
- DE-U- 1 963 274

## Beschreibung

Die Erfindung betrifft ein Federungssystem für Fahrzeuge, bestehend aus einer Tragfeder mit positiver Federrate, einer dazu parallel geschalteten, als Korrekturfeder wirkenden Magnetfeder mit negativer Federrate im Bereich des Nulldurchganges ihrer Federkennlinie sowie einem zu den beiden Federn parallelgeschalteten Stoßdämpfer, wobei die Magnetfeder eine aus einem Permanentmagnete aufweisenden und im wesentlichen ring-oder rohrförmig ausgebildeten Innenteil und einem diesen unter Bildung eines Luftspaltes koaxial umgebenden Permanentmagnete aufweisenden und im wesentlichen ring- oder rohrförmig ausgebildeten Außenteil bestehende Koaxialfeder ist, deren Arbeitshub durch eine Relativbewegung der beiden Teile in Achsrichtung gegeben ist.

Bei einem derartigen Federungssystem, wie es z.B. aus der DE-C-34 10 473 bekannt ist, hat die Magnetfeder die Aufgabe, die Federsteifigkeit im Bereich des Arbeitspunktes des Federungssystems herabzusetzen, um auch eine wirksame Dämpfung der durch Fahrbahnunebenheiten hervorgerufenen Schwingungen zu erzielen und damit den Fahrkomfort zu verbessern.

Nachteilig bei dem bekannten Federungssystem ist, daß sämtliche Elemente desselben, nämlich die Tragfeder, die Magnetfeder und der Stoßdämpfer baulich völlig voneinander getrennt sind, was einen relativ großen Platzbedarf am Einbauort und einen verhältnismäßig hohen Herstellungs- und Montageaufwand bedingt.

Der Erfindung liegt daher vor allem die Aufgabe zugrunde, diesem Nachteil abzuhelfen.

Diese Aufgabe wird ausgehend von einem Federungssystem der eingangs geschilderten Art erfindungsgemäß dadurch gelöst, daß die Magnetfeder und der Stoßdämpfer zu einer Baueinheit zusammengefaßt sind, indem die Magnetfeder den Stoßdämpfer vorzugsweise koaxial umgibt und eines der beiden Teile der Magnetfeder mit der Kolbenstange des Stoßdämpfers bewegungsgekoppelt ist, während das andere Magnetfederteil mit dem Außenrohr des Stoßdämpfers verbunden ist.

Mit der erfindungsgemäß vorgeschlagenen Magnetfeder-Stoßdämpfer-Kombination besteht das Federungssystem nur noch aus zwei getrennten Bauteilen, wobei für die Ausbildung und Anordnung der Tragfeder jede Möglichkeit offenbleibt.

Gemäß einer besonders bevorzugten Ausführungsform der Erfindung ist das Innenteil der Magnetfeder auf einem mit dem oberen Ende der Stoßdämpferkolbenstange verbundenen und auf dem Stoßdämpferaußenrohr verschiebbar geführten Gleitrohr, vorzugsweise auf Höhe des Stoßdämpferkolbens bei unbeladenem Fahrzeug befestigt, während das Außenteil der Magnetfeder an der Innenseite eines mit dem unteren Ende des Stoßdämpferaußenrohres verbundenen Aufnahmegehäuses angebracht ist. Bei dieser Ausführungsform ist das Innenteil der Magnetfeder mit der Stoßdämpferkolbenstange bewegungsgekoppelt.

Gemäß einer anderen Ausführungsform, bei der das Außenteil der Magnetfeder mit der Stoßdämpferkolbenstange bewegungsgekoppelt ist, ist das Innenteil der Magnetfeder direkt am Stoßdämpferaußenrohr, vorzugsweise auf Höhe des Stoßdämpferkolbens bei unbeladenem Fahrzeug, angebracht, während das Außenteil der Magnetfeder an der Innenseite eines mit dem oberen Ende der Stoßdämpferkolbenstange fest verbundenen und auf dem Stoßdämpferaußenrohr verschiebbar geführten Aufnahmegehäuses befestigt ist.

Alternativ dazu kann die Anordnung auch so getroffen sein, daß das Innenteil der Magnetfeder auf einem am oberen Ende des Stoßdämpferaußenrohres angesetzten und die Stoßdämpferkolbenstange umgebenden Aufnahmeteil angebracht ist, während das Außenteil der Magnetfeder an der Innenseite eines mit dem oberen Ende der Stoßdämpferkolbenstange fest verbundenen und auf dem Stoßdämpferaußenrohr verschiebbar geführten Aufnahmegehäuses befestigt ist.

Aus der oben zitierten DE-C-34 10 473 ist es auch bekannt, je nach Beladungszustand des Fahrzeuges den Arbeitspunkt der Magnetfeder dem jeweiligen Arbeitspunkt des Federungssystems automatisch nachzuführen. Eine konkrete Ausführungsform für eine solche Nachführung ist nicht angegeben. Es ist lediglich ganz allgemein von einem eine Einrichtung zum Messen des Arbeitspunktes des Federungssystems enthaltenden Regelkreis und von einem elektrischen, hydraulischen oder pneumatischen Stellglied gesprochen.

Erfindungsgemäß wird nun vorgeschlagen, daß das mit dem Stoßdämpferaußenrohr verbundene Teil der Magnetfeder dem mit der Stoßdämpferkolbenstange bewegungsgekoppelten Teil der Magnetfeder gesteuert durch die mit der Verschiebung des Arbeitspunktes des Federungssystems einhergehende Hubbewegung der Stoßdämpferkolbenstange nachführbar ist. Dadurch, daß zur Messung des Arbeitspunktes und zur Steuerung der Nachführung die Bewegung der Stoßdämpferkolbenstange herangezogen ist, kann die Nachführungseinrichtung praktisch vollständig in die erfindungsgemäß vorgeschlagene Magnetfeder-Stoßdämpfer-Kombination integriert werden.

Vorzugsweise ist hierzu bei der bereits besprochenen Ausführungsform mit mit der Stoßdämpferkolbenstange bewegungsgekoppeltem Magnetfederinnenteil das Außenteil der Magnetfeder als ein am Umfang offener und an der Innenseite des Aufnahmegehäuses fluiddicht geführter Hohlzylinder ausgebildet, dessen durch die Wand des Aufnahmegehäuses allseitig geschlossener Innenraum mit Druckfluid gefüllt und von einem mit dem Aufnahmegehäuse fest verbundenen Trennring in eine obere und eine untere Teilkammer unterteilt ist, deren jede über ein Einlaß-Steuerventil und ein den Zustrom von Druckfluid sperrendes Rückschlagventil mit einer Druckfluidquelle verbunden ist, wobei zur Steuerung der Steuerventile ein mit der Kolbenstange bewegungsgekoppeltes Steuerorgan, insbesondere eine am Gleitrohr im Bereich eines in Axialrichtung verlaufenden durchgehenden Schlitzes des Magnetfederinnenteils vorgesehene Nokkenbahn dient. Als Druckfluidquelle kann vorteilhaft der Zylinderinnenraum des Stoßdämpfers oder auch eine Hydropumpe od. ähnl. dienen. Um auf einfache Weise zu vermeiden, daß die Nachführung nicht ungewollt bei größeren Karosserieschwingungen anspricht, können die Zuleitungen zu den Steuerventilen mit einer Drosselwirkung versehen sein.

Bei dem aus der obengenannten DE-C-34 10 473 bekannten Federungssystem ist die Magnetfeder eine sogenannte axial magnetisierte Koaxialfeder d.h. eine Magnetfeder, bei der die Magnetisierungsachsen aller Permanentmagnete an jedem der beiden Teile der Magnetfeder parallel zur Bewegungsrichtung, also in Achsrichtung, liegen. Im einzelnen besteht sowohl das Innen- als auch das Außenteil dieser bekannten Magnetfeder aus mehreren in Bewegungsrichtung hintereinander angeordneten und parallel zur Bewegungsrichtung magnetisierten Permanentmagneten, die jeweils durch der Fokussierung der Magnetkraft dienende Weicheisenzwischenstücke voneinander getrennt sind. Bisherige Untersuchungen haben gezeigt, daß eine solche axial magnetisierte Magnetfeder sich für größere Federkräfte und für die Verwendung von Magneten mit hoher Energiedichte nicht mehr sehr gut eignet.

Anderseits ist aus der DE-A-18 05 789 bereits eine sogenannte radial magnetisierte Magnetfeder bekannt. Diese ebenfalls als Koaxialfeder ausgebildete Magnetfeder besteht einerseits aus einem scheibenförmigen, radial magnetisierten inneren Permanentmagneten und andererseits aus drei in Bewegungsrichtung hintereinander in einer Halterung aus ferromagnetischem Material gefaßten kreisringförmigen, radial magnetisierten äußeren Permanentmagneten. Bei einer Magnetfeder mit radialer Magnetisierung der Permanentmagnete sind die Streuflächen wesentlich kleiner als bei Magnetfedern mit axial magnetisierten Permanentmagneten, was zu einer merklichen Erhöhung des Nutzflusses führt, vor allem dann, wenn wie in der vorliegenden Erfindung gezeigt, der Magnetrückschluß über magnetisch leitende Rückschlußzylinder erfolgt, womit eine solche radial magnetisierte Magnetfeder gegenüber einer axial magnetisierten Magnetfeder bei gleicher Magnetkraft mit weniger Permanentmagneten auskommt und damit eine kleinere Baugröße aufweisen kann. Allerdings ist bei der bekannten Magnetfeder von Nachteil, daß die äußeren ringförmigen Permanentmagnete in Ausnehmungen der Halterung eingelassen sind. Damit ergibt sich nämlich bei magnetisch leitendem Material aufgrund des kurzen Feldlinienweges von der Magnetoberfläche in Richtung auf die Oberfläche der Halterung ein erhöhter Magnetstreufluß und damit ein geringerer Nutzfluß. Bei nicht magnetischem Material wird durch den wesentlich höheren magnetischen Widerstand des Magnetrückschlusses auch der Magnetnutzfluß erheblich reduziert. Abgesehen davon kommt eine derartige Magnetfeder aufgrund des als volle Scheibe ausgebildeten inneren Permanentmagneten von vorherein für das erfindungsgemäße Federungssystem, bei dem die Magnetfeder den Stoßdämpfer umgibt, nicht in Frage.

Eine Weiterbildung der Erfindung sieht nun vor, daß die Magnetfeder, wie an sich bekannt, in radialer Richtung magnetisierte Permanentmagnete besitzt, wobei sowohl der(die) Permanentmagnet(e) des Innenteils als auch der(die) Permanentmagnet(e) des Außenteils auf einem inneren bzw. äußeren Eisenrückschlußzylinder angebracht sind.

Diese Ausbildung der Magnetfeder bringt aus den vorher genannten Gründen gegenüber der aus der DE-A-18 05 789 bekannten Magnetfeder mit radialer Magnetisierung einen höheren Nutzfluß und einen geringeren Streufluß und kann somit bei gleicher Magnetkraft noch kleiner gebaut werden, womit sie für die erfindungsgemäß vorgeschlagene Kombination mit dem Stoßdämpfer eigentlich erst besonders gut geeignet ist.

Eine weitere Erhöhung des Nutzflusses ergibt sich, wenn die Permanentmagnete auf Erhöhungen der Eisenrückschlußzylinder angebracht sind. Diese Ausführungsform der Magnetfeder ist besonders dann vorteilhaft, wenn ein größerer Federweg der Magnetfeder gewünscht ist und somit ein größerer Abstand zwischen benachbarten Permanentmagneten erforderlich ist.

Nach einem weiteren Merkmal der Erfindung kann der gegenseitige Abstand der Permanentmagnete des Außenteils gegenüber dem gegenseitigen Abstand der Permanentmagnete des Innenteils unterschiedlich sein, wobei vorzugsweise dieser Unterschied der Magnetabstände so gewählt ist, daß die Kennlinie der Magnetfeder fast über den gesamten Federweg einen im wesentlichen linearen Kraftverlauf aufweist.

Normalerweise sind die einzelnen Permanentmagnete der Magnetfeder wie beim Außenteil der aus der DE-PS 18 05 789 als durchgehende Ringe ausgebildet, da dadurch eine maximale Magnetkraft erreicht wird.

Soll jedoch die Magnetkraft der Magnetfeder durch Relativverdrehung des Magnetfederinnen- und -außenteils einstellbar sein, wie es aus der DE-PS 34 10 473 bei einer Magnetfeder mit axialer Magnetisierung bereits bekannt ist, so können nach einem weiteren Merkmal der Erfindung die einzelnen Permanentmagnete des Innenteils und des Außenteils jeweils als zwei sich diametral gegenüberliegende und sich vorzugsweise jeweils im wesentlichen über einen Viertelkreis erstreckende Ringsegmente ausgebildet sein.

Nachstehend ist die Erfindung anhand der Zeichnungen näher erläutert. Es zeigen:
Fig. 1 schematisch eine Magnetfeder-Stoßdämpfer-Kombination eines erfindungsgemäßen Federungssystems ohne Beladungszustandsnachstellung der Magnetfeder, wobei das Innenteil der Magnetfeder mit der Stoßdämpferkolbenstange bewegungsgekoppelt ist,
Fig. 2 schematisch eine Magnetfeder-Stoßdämpfer-Kombination ohne Beladungszustandsnachstellung der Magnetfeder, wobei das Außenteil der Magnetfeder mit der Stoßdämpferkolbenstange bewegungsgekoppelt ist,
Fig. 3 schematisch eine abgewandelte Ausführungsform der Magnetfeder-Stoßdämpfer-Kombination nach Fig. 2,
Fig. 4 schematisch eine Magnetfeder-Stoßdämpfer-Kombination mit Beladungszustandsnachstellung der Magnetfeder,
Fig. 5 eine abgewandelte Ausführungsform der Magnetfeder-Stoßdämpfer-Kombination nach Fig. 4,
Fig. 6 im Vertikalschnitt den grundsätzlichen Aufbau einer für die erfindungsgemäß eingesetzte Magnetfeder-Stoßdämpfer-Kombination bevorzugten Magnetfeder,
Fig. 7 einen Schnitt nach der Linie VII-VII der Fig. 6,
Fig. 8 im Vertikalschnitt eine abgewandelte Ausführungsform der Magnetfeder nach den Fig. 6 und 7, bei welcher Ausführungsform die Magnetkraft und damit die Federsteifigkeit verstellbar ist,
Fig. 9 einen Schnitt nach der Linie IX-IX der Fig. 8,
Fig. 10 einen Vertikalschnitt einer abgewandelten Ausführungsform der Magnetfeder nach Fig. 6, und
Fig. 11 einen Schnitt nach der Linie XI-XI der Fig. 10.

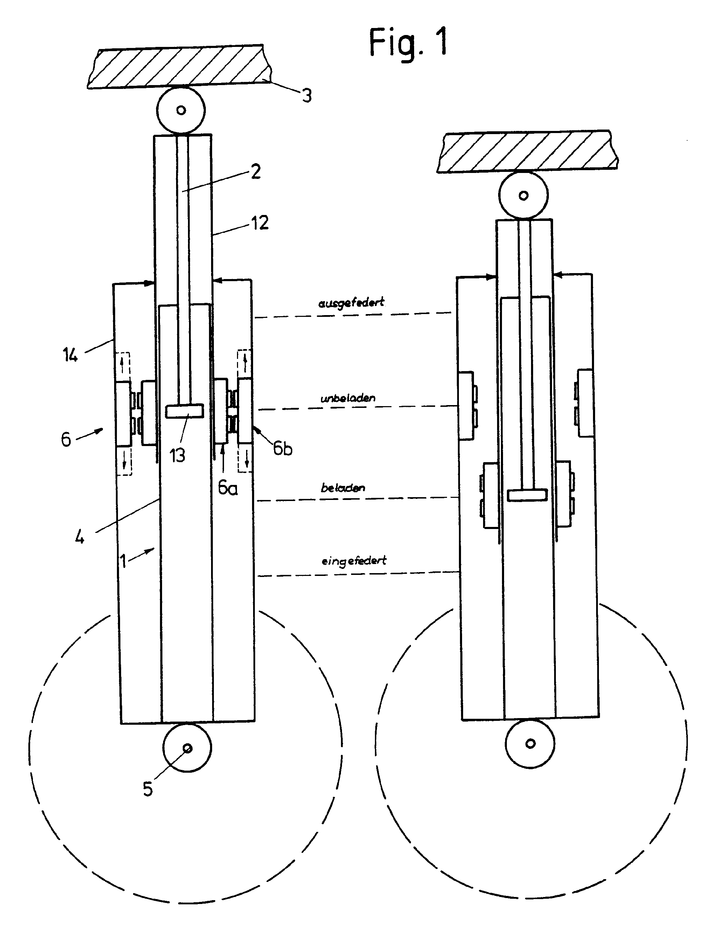

Es sei darauf hingewiesen, daß in den die einzelnen Ausführungsformen der erfindungsgemäß eingesetzten Magnetfeder-Stoßdämpfer-Kombination veranschaulichenden Fig. 1 bis 5 jeweils die zu dem erfindungsgemäßen Federungssystem gehörende Tragfeder, deren Kennlinie durch die Magnetfeder korrigiert werden soll, nicht dargestellt ist. Es kann sich bei dieser Feder um jede beliebige Federart, wie eine Schraubenfeder, einen Drehstab usw. handeln. Ferner ist in diesen Fig. 1 bis 5 die Magnetfeder-Stoßdämpfer-Kombination jeweils links im unbeladenen Fahrzeugzustand und jeweils rechts im beladenen Fahrzeugzustand dargestellt.

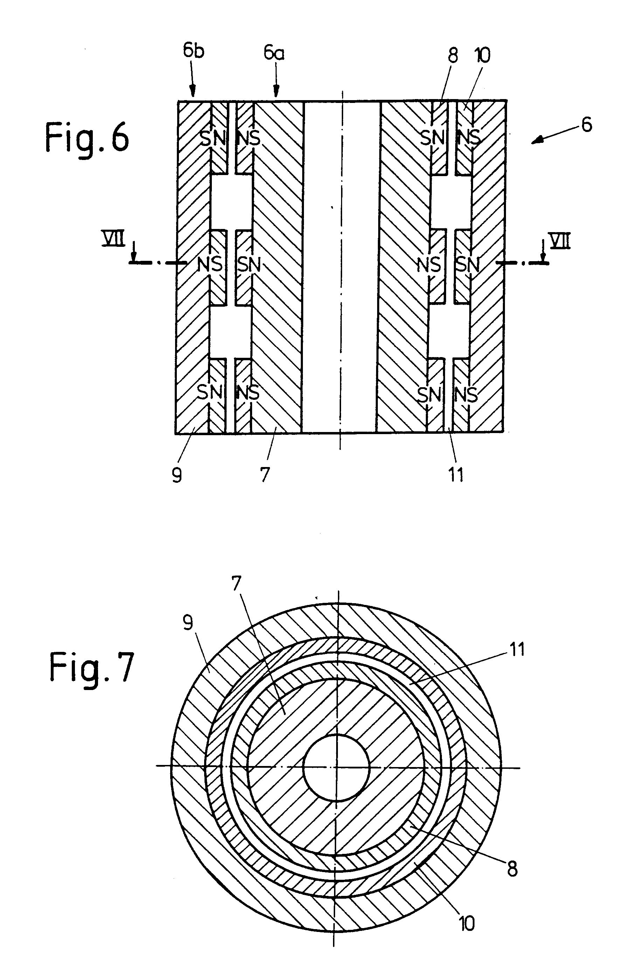

Die in Fig. 1 gezeigte Magnetfeder-Stoßdämpfer-Kombination umfaßt einen üblichen hydraulischen Stoßdämpfer 1, dessen Kolbenstange 2 mit dem gefederten Masseanteil eines Fahrzeuges nämlich dem Fahrzeugaufbau 3, und dessen Außenrohr 4 mit einem ungefederten Masseanteil, nämlich einer Radachse 5 verbunden ist. Ferner umfaßt die Kombination eine aus einem Innenteil 6a und einem Außenteil 6b bestehende Magnetfeder 6, deren bevorzugte Ausführungsformen in den Fig. 6 bis 11 dargestellt sind.

Gemäß diesen Figuren besteht eine solche Magnetfeder 6 grundsätzlich aus einem inneren Eisenrückschlußzylinder 7, an dessen Außenseite im axialen Abstand zueinander innere, in radialer Richtung magnetisierte Permanentmagnete 8 angebracht sind, sowie einem konzentrisch zum inneren Eisenrückschlußzylinder 7 angeordneten äußeren Eisenrückschlußzylinder 9, der an seiner Innenseite gegenüber den inneren Permanentmagneten 8 ebenfalls in radialer Richtung magnetisierte äußere Permanentmagnete 10 trägt, wobei die Magnetisierungsrichtungen zweier einander in Radialrichtung gegenüberliegender Magneten sowie auch zweier benachbarter Magneten ein und desselben Eisenrückschlußzylinders 7 bzw. 9 jeweils entgegengesetzt sind. Die Permanentmagneten 8,10 können an ihren Eisenrückschlußzylindern 7,9 durch Schrauben, Klemmen, Kleben od. ähnl. befestigt sein. Mit 11 ist der Luftspalt der Magnetfeder bezeichnet.

In der gezeigten Relativlage des Innenteils 6a und des Außenteils 6b, in der sich gleichnamige Pole der beiden Teile relativ zur Bewegungsrichtung, d.h. zur Achsrichtung der Magnetfeder, gegenüberstehen, befindet sich die Magnetfeder in ihrer labilen Gleichgewichtslage. Diese labile Gleichgewichtslage entspricht in dem nicht linearen Kraft-Weg-Diagramm der Magnetfeder einem Nulldurchgang, in dessen Bereich eine negative Federrate vorliegt.

Wie bekannt, führt die Kombination einer solchen Magnetfeder mit einer gewöhnlichen eine positive und lineare Federrate besitzenden Feder, im vorliegenden Fall der nicht gezeigten Tragfeder, zu einem Federungssystem mit nichtlinearer Kennlinie, die im Bereich des vom Nulldurchgang der Magnetfeder bestimmten Arbeitspunktes nur eine geringe Steigung besitzt, sodaß die Federsteifigkeit des Federungssystems in diesem Bereich relativ niedrig ist. Außerhalb dieses durch den Arbeitspunkt festgelegten Bereiches hinaus, also bei größeren Auslenkungen sowohl in der einen als auch in der anderen Richtung, nimmt die Federsteifigkeit dann wieder stark zu.

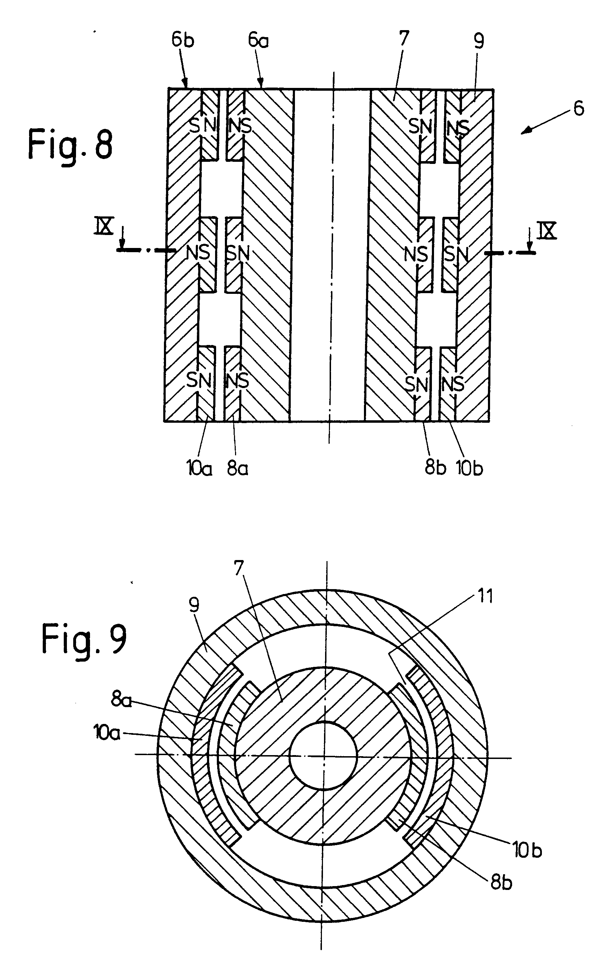

Während in der Ausführungsform der Magnetfeder 6 nach den Fig. 6 und 7 die einzelnen Permanentmagnete 8 und 10 als durchgehende Ringe ausgeführt sind, liegen sie bei der Ausführungsform nach den Fig. 8 und 9 lediglich als jeweils zwei einander diametral gegenüberliegende und sich über jeweils einen Viertelkreis erstreckende Ringsegmente 8a und 8b bzw. 10a und 10b vor. Diese Ausführungsform ermöglicht eine einfache Verstellbarkeit der Magnetkraft und damit der Federsteifigkeit der Feder durch eine Relativverdrehung des Innenteils 6a und Außenteils 6b. In der gezeigten Stellung liegen sich die Ringsegmente 8a,8b und 10a,10b genau gegenüber, sodaß die Magnetkraft am größten ist. Bei einer Relativverdrehung um 90° liegen sich keine Magnete gegenüber und es wird daher keine Magnetkraft erzeugt.

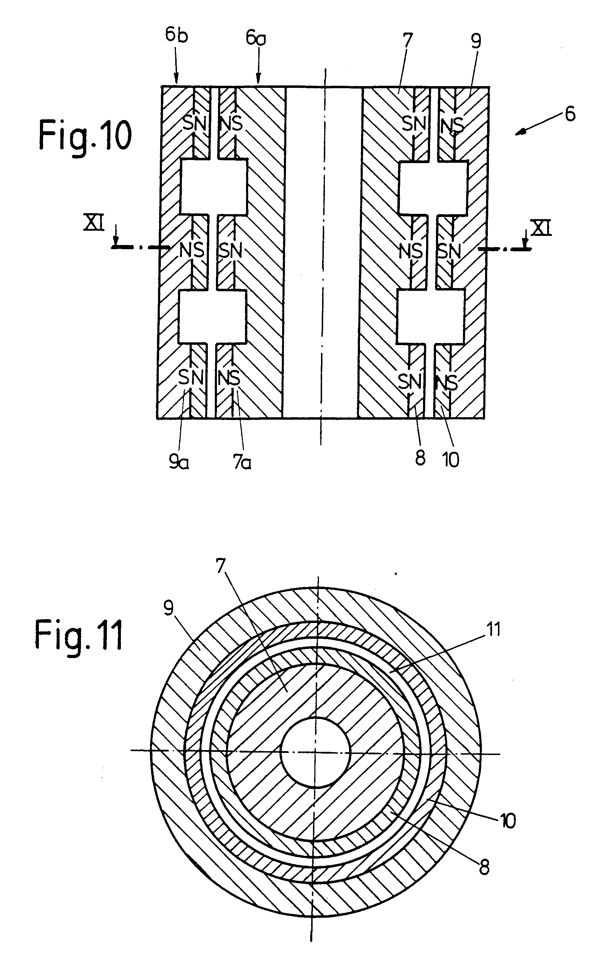

Die Fig. 10 und 11 zeigen eine Ausführungsform der Magnetfeder, bei welcher das Magnetmaterial dadurch besser ausgenützt wird, daß die Permanentmagnete 8,10 auf Erhöhungen 7a und 9a der beiden Eisenrückschlußzylinder 7 und 9 angebracht sind. Damit wird der Feldlinienweg für einen Teilstreufluß, nämlich von der Magnetoberfläche im Luftspalt 11 in Richtung zu den zwischen den Erhöhungen 7a,9a liegenden Zylinderoberfläche der Eisenrückschlußzylinder 7,9 größer, wodurch es zu einer Verringerung des vorhandenen Magnetstreuflusses und damit zu einer Erhöhung der Magnetkraft kommt. Diese Magnetanordnung ist insbesondere dann vorteilhaft, wenn der Abstand zwischen zwei benachbarten Magneten auf den Eisenrückschlußzylindern zur Erreichung großer Federwege sehr weit gemacht wird. Der Federweg setzt sich ja im wesentlichen aus diesem Magnetabstand und der Magnetbreite (Magnetabmessung in Axialrichtung der Magnetfeder) zusammen.

Falls gewünscht, kann eine Veränderung des Kraftverlaufes über den Federweg, insbesondere im Sinne einer Linearisierung des Kraftverlaufs fast über den gesamten Bereich der negativen Federkennlinie, dadurch erzielt werden, daß die gegenseitigen Abstände der inneren Magnete 8 gegenüber den gegenseitigen Abständen der äußeren Magnete 10 unterschiedlich groß gewählt werden.

Es sei nun zu der in Fig. 1 gezeigten Ausführungsform der Magnetfeder-Stoßdämpfer-Kombination zurückgekommen. Bei dieser Ausführungsform ist das Innenteil 6a der Magnetfeder 6 auf einem mit dem oberen Ende der Kolbenstange 2 starr verbundenen und auf dem Außenrohr 4 des Stoßdämpfers 1 verschiebbar geführten Gleitrohr 12 auf Höhe des Kolbens 13 des Stoßdämpfers montiert. Damit ist das Innenteil 6a mit der Kolbenstange 2 bewegungsgekoppelt. Das Außenteil 6b der Magnetfeder ist an der Innenseite eines mit dem unteren Ende des Stoßdämpferaußenrohres 4 fest verbundenen Aufnahmegehäuses 14 montiert und somit starr mit dem Stoßdämpferaußenrohr 4 bzw. mit der Radachse 5 verbunden. Wie aus dem linken Teil der Fig. 1 ersichtlich ist, befindet sich die Magnetfeder 6 im Bereich des unbeladenen Zustandes des Fahrzeuges in ihrer labilen Gleichgewichtslage und wirkt somit im Bereich dieses Fahrzeugzustandes. In den unbeladenen Fahrzeugzustand ist zweckmäßig das Gewicht des Fahrers miteinbezogen. In diesem Fahrzeugzustand ist die Masse des Fahrzeuges am geringsten und damit die Dämpfung von durch Fahrbahnunebenheiten hervorgerufenen Schwingungen besonders bei niedrigen Frequenzen am schlechtesten. Durch den Einsatz der Magnetfeder in diesem Belastungsbereich kann dieser Mangel ausgeglichen werden.

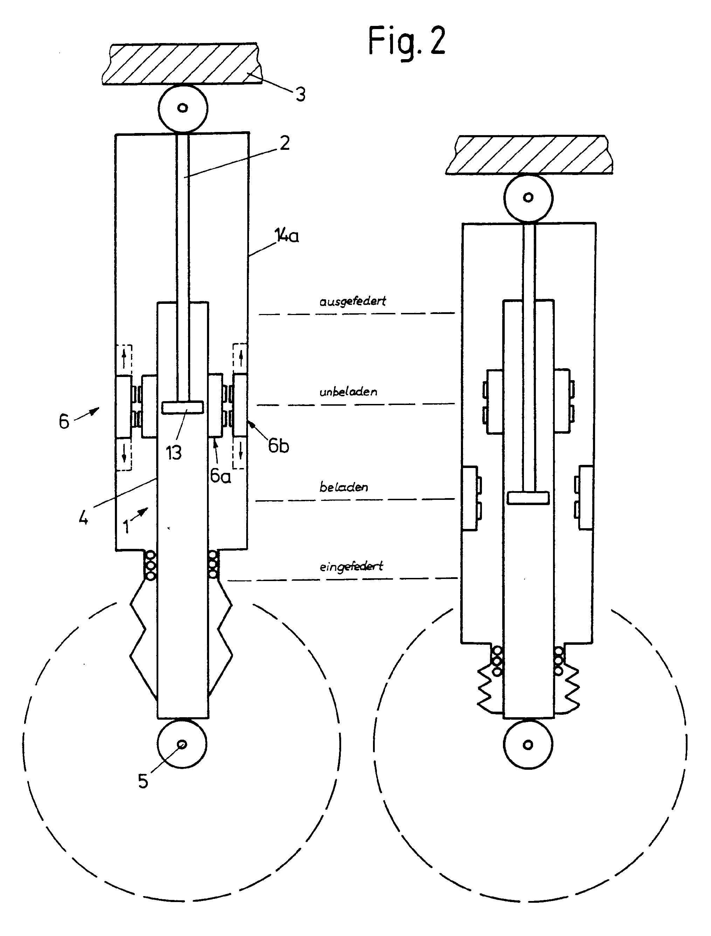

Bei dem in Fig. 2 gezeigten Ausführungsbeispiel ist das Innenteil 6a der Magnetfeder 6 direkt am Stoßdämpferaußenrohr 4 und somit starr mit der Radachse 5 verbunden. Das das Außenteil 6b tragende Aufnahmegehäuse 14a ist mit dem oberen Ende der Kolbenstange 2 verbunden und am Stoßdämpferaußenrohr 4 verschiebbar geführt, sodaß hier das Außenteil 6b der Magnetfeder 6 mit der Kolbenstange 2 bewegungsgekoppelt ist. Auch hier wirkt die Magnetfeder 6 nur im Bereich des unbeladenen Fahrzeugzustandes.

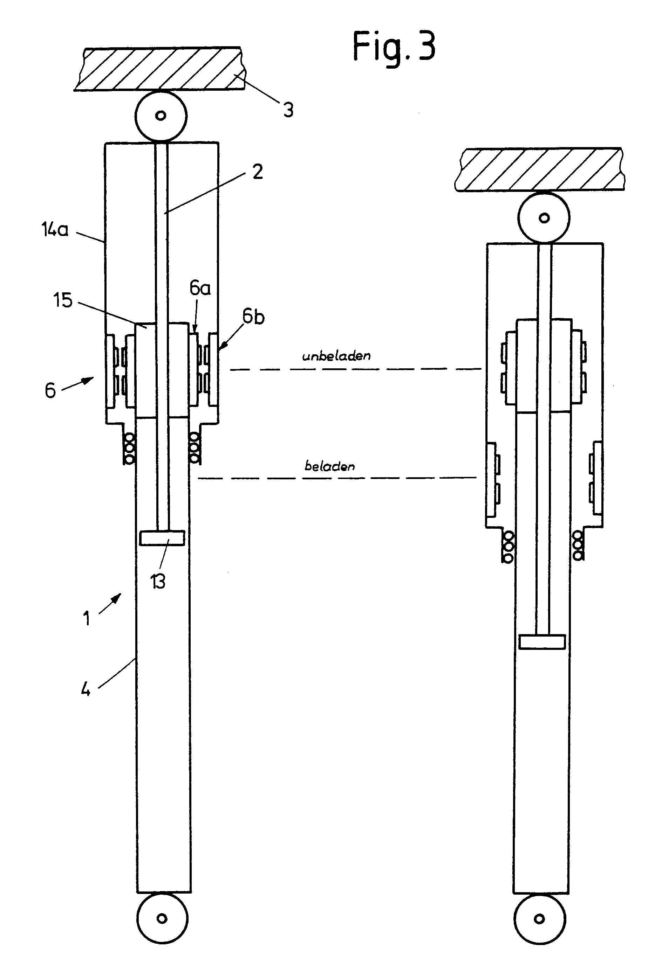

Die in Fig. 3 gezeigte Ausführungsform entspricht funktionell der Ausführungsform nach Fig 2. Unterschiedlich ist nur, daß das Innenteil 6a der Magnetfeder 6 nicht am Umfang des Stoßdämpferaußenrohres 4, sondern auf einem an das obere Ende dieses Stoßdämpferaußenrohres angesetzten, die Kolbenstange 2 umgebenden Aufnahmeteil 15 montiert ist.

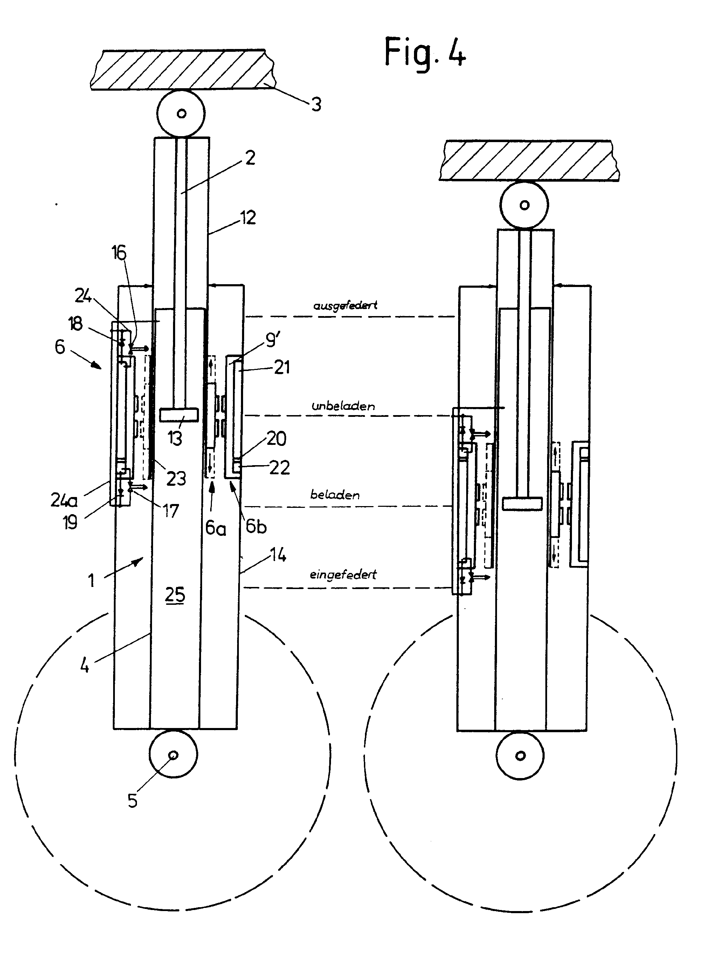

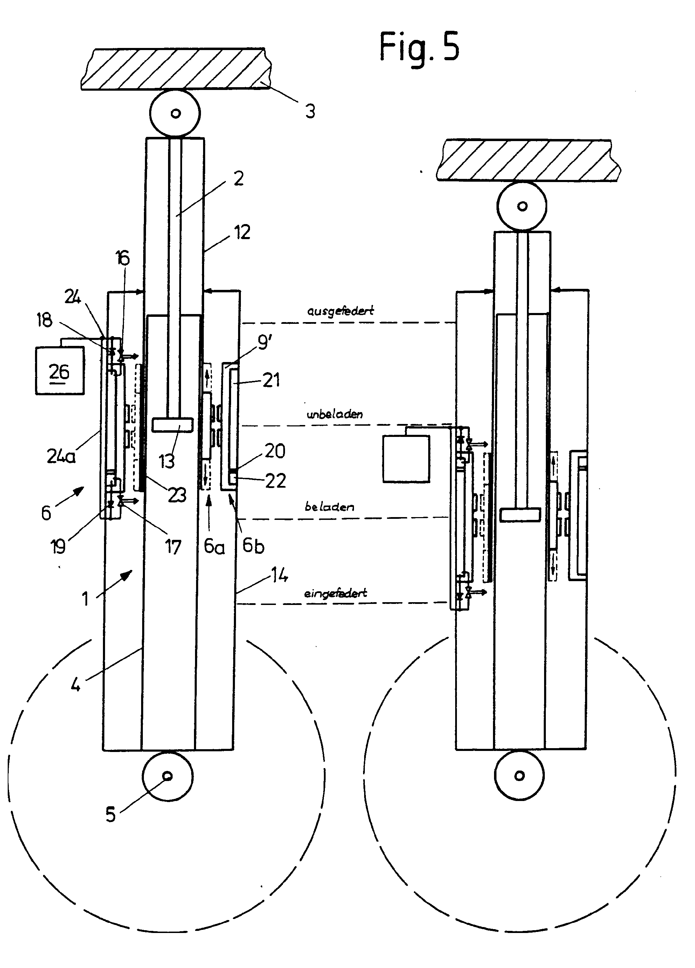

Während bei den in den Fig. 1 bis 3 dargestellten Ausführungsformen, wie bereits erwähnt, die Magnetfeder 6 nur im unbeladenen Fahrzeugzustand wirksam ist, ist bei den Ausführungsformen nach den Fig. 4 und 5 eine Beladungszustands-Nachstellung der Magnetfeder vorgesehen. Wie bei der Ausführungsform nach Fig. 1 ist hier das Magnetfederinnenteil 6a auf einem mit dem oberen Ende der Kolbenstange 2 verbundenen Gleitrohr 12 montiert, während das Magnetfederaußenteil 6b von einem mit dem unteren Ende des Stoßdämpferaußenrohres 4 verbundenen Aufnahmegehäuse 14 getragen wird. Allerdings ist hier der äußere Eisenrückschlußzylinder als ein an seinem Umfang offener Hohlzylinder 9' ausgebildet, der an der Innenseite des Aufnahmegehäuses 14 flüssigkeitsdicht geführt ist und in seinem durch das Aufnahmegehäuse 14 allseitig geschlossenen Innenraum eine Hydraulikflüssigkeit enthält. An dem Hohlzylinder 9' sind weiters zwei Einlaß-Steuerventile 16 und 17 und zwei den Zustrom sperrende Rückschlagventile 18 und 19 angebracht. Ein mit dem Aufnahmegehäuse 14 fest verbundener Trennring 20 teilt den Innenraum des Hohlzylinders 9' in eine obere Teilkammer 21 und eine untere Teilkammer 22, wobei der Teilkammer 21 das Steuerventil 16 und das Rückschlagventil 18 und der Teilkammer 22 das Steuerventil 17 und das Rückschlagventil 19 zugeordnet sind. Die Steuerung der Steuerventile 16 und 17 erfolgt über eine auf dem Gleitrohr 12 vorgesehene Nockenbahn 23. Im Bereich dieser Nockenbahn 23 weist das Magnetfederinnenteil 6a einen in Axialrichtung verlaufenden durchgehenden Schlitz auf.

Die in den Fig. 4 und 5 dargestellten Ausführungsformen unterscheiden sich lediglich in der Art der Energiezufuhr zu dem Hohlzylinder 9'. Bei der Ausführungsform nach Fig. 4 sind die beiden Steuerventile 16 und 17 und die beiden Rückschlagventile 18 und 19 über Leitungen 24,24a mit dem Zylinderinnenraum 25 des Stoßdämpfers 1 verbunden, und die Energiezufuhr für den Hohlzylinder 9' erfolgt durch die durch den Stoßdämpferkolben 13 eingebrachte Schwingungsenergie des Fahrzeuges. Bei der Ausführungsform nach Fig. 5 ist hingegen eine kleine Hydropumpe 26 vorgesehen. Diese Arbeitsweise ist bei beiden Ausführungsformen gleich.

Solange sich, wie im linken Teil der Fig. 4 und 5 gezeigt, die Karosserieschwingungen bzw. die Hubbewegungen des Magnetfederinnenteils 6a im Arbeitsbereich der von dem Hohlzylinder 9' getragenen äußeren Magnete bewegen, werden die beiden Steuerventile 16 und 17 nicht betätigt, d.h. sie bleiben geschlossen, sodaß der Hohlzylinder 9' in seiner dem unbeladenen Fahrzeugzustand entsprechenden Lage verbleibt.

Sobald jedoch dieser vorgegebene Arbeitsbereich nach oben oder unten überschritten wird, wird eines der Steuerventile 16,17 geöffnet. Erfolgt beispielsweise die Überschreitung durch eine Fahrzeugbeladung nach unten, so wird durch die Nockenbahn 23 des Gleitrohres 12 das untere Steuerventil 17 geöffnet, sodaß Hydraulikflüssigkeit in die untere Teilkammer 22 des Hohlzylinders 9' strömen kann. Der Flüssigkeitsdruck stützt sich auf dem Trennring 20 im Hohlzylinder 9' ab, wodurch letzterer nach unten geschoben wird. Diese Bewegung bleibt solange bestehen, bis das untere Steuerventil 17 aus der Nockenbahn 23 des Gleitrohres 12 ausläuft und sich wieder schließen kann, womit die im rechten Teil der Fig. 4 und 5 gezeigte Beladungsstellung erreicht ist. Es sind nun wiederum beide Steuerventile 16 und 17 geschlossen und die äußeren Magnete liegen wieder den inneren Magneten gegenüber.

Im gleichen Maß, wie sich die untere Teilkammer 22 füllt, muß sich die obere Teilkammer 21 entleeren. Dies geschieht über das obere Rückschlagventil 18.

Wird das Fahrzeug entladen, so läuft der Vorgang umgekehrt ab, indem durch die Nockenbahn 13 das obere Steuerventil 16 geöffnet wird, Hydraulikflüssigkeit in die obere Teilkammer 21 einströmt und gleichzeitig Hydraulikflüssigkeit aus der unteren Teilkammer 21 über das untere Rückschlagventil 19 austritt, bis die am Hohlzylinder 9' vorgesehenen äußeren Magnete wieder den inneren Magneten gegenüberliegen.

Es versteht sich, daß diese Beladungszustands-Nachstellung auch für sämtliche Teilbeladungszustände wirksam ist. In den Fig. 4 und 5 sind der Einfachheit halber nur die dem unbeladenen und dem beladenen Zustand entsprechenden Endstellungen gezeigt.

Um zu vermeiden, daß die Nachstellung des Magnetfederaußenteils 6b nicht ungewollt bei einzelnen zu großen Karosserieschwingungen durch übergroße Fahrbahnunebenheiten anspricht, weil über die Nockenbahn 23 die Steuerventile 16,17 betätigt werden, werden zweckmäßig die Zuleitungen 24,24a zu den Steuerventilen 16,17 mit einer Drosselwirkung versehen.

Anstelle der Hydraulikflüssigkeit als energieübertragendes Medium könnte selbstverständlich auch Druckluft verwendet werden. Eine Druckluftquelle ist in vielen Fahrzeugen ohnedies vorhanden.

Bei sämtlichen der besprochenen Ausführungsformen der Magnetfeder-Stoßdämpfer-Kombination, kann eine Verstellbarkeit der Magnetkraft der Magnetfeder, wie sie im Zusammenhang mit den Fig. 8 und 9 beschrieben wurde, vorgesehen sein. Diese Magnetkraftverstellbarkeit kann einerseits beim Einbau des Federungssystems zur Anpassung der Federsteifigkeit der Magnetfeder an die jeweils zum Einsatz kommende Tragfeder verwendet werden. Anderseits ist es möglich, die Federsteifigkeit der Magnetfeder den jeweiligen Fahrbedingungen, insbesondere der Fahrgeschwindigkeit, anzupassen. Die hiezu notwendige Relativverdrehung des Innen- und Außenteils der Magnetfeder kann über einen kleinen Zusatzmotor und ein entsprechendes Getriebe erfolgen und gegebenenfalls von einem Bordcomputer des Fahrzeuges gesteuert sein.

Es versteht sich, daß sich die Erfindung nicht auf die dargestellten und beschriebenen Ausführungsformen beschränkt. So könnte für das erfindungsgemäße Federungssystem durchaus auch die aus der DE-C-34 10 473 bekannte Magnetfeder mit axialer Magnetisierung verwendet werden, obgleich hiefür die hierin beschriebene Magnetfeder mit radialer Magnetisierung aufgrund ihrer wesentlich kleineren Baugröße wesentlich besser geeignet ist. Wird eine Magnetfeder mit radialer Magnetisierung der hierin beschriebenen Art verwendet, kann auch mit einer von der in den Fig. 6,8 und 10 gezeigten Anzahl von drei in Bewegungsrichtung hintereinander angeordneten Permanentmagneten am Innen- und Außenteil abweichenden Anzahl von Magneten die gewünschte Federrate gefunden werden. So ist z.B. in den Fig. 1 bis 5 die Magnetfeder mit jeweils nur zwei Permanentmagneten am Innen- und Außenteil gezeigt.

## Patentansprüche

1. Federungssystem für Fahrzeuge, bestehend aus einer Trägfeder mit positiver Federrate, einer dazu parallel geschalteten, als Korrekturfeder wirkenden Magnetfeder (6) mit negativer Federrate im Bereich des Nulldurchganges ihrer Federkennlinie sowie einem zu den beiden Federn parallelgeschalteten Stoßdämpfer (1), wobei die Magnetfeder (6) eine aus einem Permanentmagnete aufweisenden und im wesentlichen ring- oder rohrförmig ausgebildeten Innenteil (6a) und einem diesen unter Bildung eines Luftspaltes (11) koaxial umgebenden, Permanentmagnete (10) aufweisenden und im wesentlichen ring- oder rohrförmig ausgebildeten Außenteil (6b) bestehende Koaxialfeder ist, deren Arbeitshub durch eine Relativbewegung der beiden Teile in Achsrichtung gegeben ist, dadurch gekennzeichnet, daß die Magnetfeder (6) und der Stoßdämpfer (1) zu einer Baueinheit zusammengefaßt sind, indem die Magnetfeder (6) den Stoßfdämpfer (1), vorzugsweise koaxial, umgibt und eines der beiden Teile (6a,6b) der Magnetfeder (6) mit der Kolbenstange (2) des Stoßdämpfers (1) bewegungsgekoppelt ist, während das andere Magnetfederteil (6b bzw. 6a) mit dem Außenrohr (4) des Stoßdämpfers (1) verbunden ist.

2. Federungssystem nach Anspruch 1, dadurch gekennzeichnet, daß das Innenteil (6a) der Magnetfeder (6) auf einem mit dem oberen Ende der Stoßdämpferkolbenstange (2) verbundenen und auf dem Stoßdämpferaußenrohr (4) verschiebbar geführten Gleitrohr (12), vorzugsweise auf Höhe des Stoßdämpferkolbens (13), befestigt ist, während das Außenteil (6b) der Magnetfeder (6) an der Innenseite eines mit dem unteren Ende des Stoßdämpferaußenrohres (4) verbundenen Aufnahmegehäuses (14) angebracht ist (Fig. 1,4 und 5).

3. Federungssystem nach Anspruch 1, dadurch gekennzeichnet, daß das Innenteil (6a) der Magnetfeder (6) direkt am Stoßdämpferaußenrohr (4), vorzugsweise auf Höhe des Stoßdämpferkolbens (13), angebracht ist, während das Außenteil (6b) der Magnetfeder (6) an der Innenseite eines mit dem oberen Ende der Stoßdämpferkolbenstange (2) fest verbundenen und auf dem Stoßdämpferaußenrohr (4) verschiebbar geführten Aufnahmegehäuses (14a) befestigt ist (Fig. 2).

4. Federungssystem nach Anspruch 1, dadurch gekennzeichnet, daß das Innenteil (6a) der Magnetfeder (6) auf einem am oberen Ende des Stoßdämpferaußenrohres (4) angesetzten und die Stoßdämpferkolbenstange (2) umgebenden Aufnahmeteil (15) angebracht ist, während das Außenteil (6b) der Magnetfeder (6) an der Innenseite eines mit dem oberen Ende der Stoßdämpferkolbenstange (2) fest verbundenen und auf dem Stoßdämpferaußenrohr (4) verschiebbar geführten Aufnahmegehäuses (14a) befestigt ist (Fig. 3).

5. Federungssystem nach Anspruch 4, dadurch gekennzeichnet, daß das Aufnahmeteil (15) und das Stoßdämpferaußenrohr (4) gleichen Außendurchmesser aufweisen (Fig. 3).

6. Federungssystem nach Anspruch 1, mit automatischer Nachführung des Arbeitspunktes der Magnetfeder bei einer Verschiebung des Arbeitspunktes des Federungssystems, dadurch gekennzeichnet, daß das mit dem Stoßdämpferaußenrohr (4) verbundene Teil (6a oder 6b) der Magnetfeder (6) dem mit der Stoßdämpferkolbenstange (2) bewegungsgekoppelten Teil (6b bzw. 6a) der Magnetfeder gesteuert durch die mit der Verschiebung des Arbeitspunktes des Federungssystems einhergehende Hubbewegung der Stoßdämpferkolbenstange (2) nachführbar ist.

7. Federungssystem nach den Ansprüchen 2 und 6, dadurch gekennzeichnet, daß das Außenteil (6b) der Magnetfeder (6) als ein am Umfang offener und an der Innenseite des Aufnahmegehäuses (14) fluiddicht geführter Hohlzylinder (9') ausgebildet ist, dessen durch die Wand des Aufnahmegehäuses (14) allseitig geschlossener Innenraum mit Druckfluid gefüllt und von einem mit dem Aufnahmegehäuse (14) fest verbundenen Trennring (20) in eine obere (21) und eine untere Teilkammer (22) unterteilt ist, deren jede über ein Einlaß-Steuerventil (16 bzw. 17) und ein den Zustrom von Druckfluid sperrendes Rückschlagventil (18 bzw. 19) mit einer Druckfluidquelle (25;26) verbunden ist, wobei zur Steuerung der Steuerventile (16,17) ein mit der Kolbenstange (2) bewegungsgekoppeltes Steuerorgan, insbesondere eine am Gleitrohr (12) im Bereich eines in Axialrichtung verlaufenden durchgehenden Schlitzes des Magnetfederinnenteils (6a) vorgesehene Nockenbahn (23) dient (Fig. 4 und 5).

8. Federungssystem nach Anspruch 7, dadurch gekennzeichnet, daß als Druckfluidquelle der Zylinderinnenraum (25) des Stoßdämpfers (1) dient (Fig. 4).

9. Federungssystem nach Anspruch 7, dadurch gekennzeichnet, daß als Druckfluidquelle eine Hydropumpe (26) dient (Fig. 5).

10. Federungssystem nach einem der Ansprüche 7 bis 9, dadurch gekennzeichnet, daß die Zuleitungen (24;24a) zu den Steuerventilen (16,17) mit einer Drosselwirkung versehen sind.

11. Federungssystem nach einem der Ansprüche 1 bis 10, dadurch gekennzeichnet, daß die Magnetfeder (6) in radialer Richtung magnetisierte Permanentmagnete besitzt, wobei sowohl der (die) Permanentmagnet(e) (8) des Innenteils (6a) als auch der(die) Permanentmagnet(e) (10) des Außenteils (6b) auf einem inneren bzw. äußeren Eisenrückschlußzylinder (7 bzw. 9) angebracht sind (Fig. 6 bis 11).

12. Federungssystem nach Anspruch 11, dadurch gekennzeichnet, daß die Permanentmagnete (8,10) auf Erhöhungen (7a,9a) der Eisenrückschlußzylinder (7,9) angebracht sind (Fig. 10 und 11).

13. Federungssystem nach Anspruch 11 oder 12, dadurch gekennzeichnet, daß der gegenseitige Abstand der Permanentmagnete (10) des Außenteils (6b) gegenüber dem gegenseitigen Abstand der Permanentmagnete (8) des Innenteils (6a) unterschiedlich ist.

14. Federungssystem nach Anspruch 13, dadurch gekennzeichnet, daß der Unterschied der Magnetabstände so gewählt ist, daß die Kennlinie der Magnetfeder (6) fast über den gesamten Federweg einen im wesentlichen linearen Kraftverlauf aufweist.

15. Federungssystem nach einem der Ansprüche 1 bis 14, dadurch gekennzeichnet, daß die einzelnen Permanentmagneten ringförmig ausgebildet sind.

16. Federungssystem nach einem der Ansprüche 11 bis 14, bei dem die Magnetkraft der Magnetfeder durch Relativverdrehung des Magnetfederinnen- und -außenteils einstellbar ist, dadurch gekennzeichnet, daß die einzelnen Permanentmagnete des Innenteils (6a) und des Außenteils (6b) jeweils als zwei sich diametral gegenüberliegende und sich vorzugsweise jeweils im wesentlichen über einen Viertelkreis erstreckende Ringsegmente (8a,8b bzw. 10a,10b) ausgebildet sind (Fig. 8 und 9).

## Claims

1. Spring system for vehicles, consisting of a supporting spring with positive spring rate, a shunt-connected magnetic spring (6) serving as correction spring with negative spring rate in the area of the zero passage of its spring characteristic line as well as of a shock aborber (1) connected in parallel to both springs; the magnetic spring (6) is a coaxial spring consisting of a basicly ring- or tube-shaped internal component (6a) featuring permanent magnets and a basicly ring- or tube-shaped external component (6b) that is under formation of an air gap (11) coaxially surrounding the internal component and is featuring permanent magnets(10). The coaxial spring's working stroke is given by a relative motion of either components in axle direction, marked by the fact that the magnetic spring (6) and the shock absorber (1) are combined into a construction unit, while the magnetic spring (6) is surrounding the shock absorber (1), preferably coaxially, and one of the magnetic spring's (6) components (6a,6b) is motion-coupled with the shock absorber's (1) piston rod (2), whereas the other magnetic spring component (6b or 6a respectively) is connected with the shock absorber's (1) outer tube (4).

2. Spring system according to claim 1, marked by the fact that the magnetic spring's (6) internal component (6a) is attached on a sliding tube (12) that is connected with the upper end of the shock absorber's piston rod (2) and slidingly guided on the shock absorber's outer tube (4), preferably at the height of the shock-absorber piston (13), while the magnetic spring's (6) external component (6b) is attached to the interior side of a locating box (14) that is connected with the lower end of the shock absorber's outer tube (4) (fig. 1,4 and 5).

3. Spring system according claim 1, marked by the fact that the magnetic spring's (6) internal component (6a) is attached directly to the shock absorber's outer tube (4), preferably at the height of the shock-absorber piston (13), while the magnetic spring's (6) external component (6b) is attached to the interior side of a locating box (14a) that is connected with the upper end of the shock absorber's piston rod (2) and that is slidingly guided on the shock absorber's outer tube (4) (fig. 2).

4. Spring system according to claim 1, marked by the fact that the magnetic spring's (6) internal component (6a) is attached to a support (15) that is put to the upper end of the shock absorber's outer tube (4) and is surrounding the shock absorber's piston rod (2), while the magnetic spring's (6) external component (6b) is attached to the interior side of a locating box (14a) that is firmly connected with the upper end of the shock absorber's piston rod (2) and that is slidingly guided on the shock absorbers's outer tube (4) (fig. 3).

5. Spring system according to claim 4, marked by the fact that the support (15) and the shock absorber's outer tube (4) are having the same outside diameter (fig. 3).

6. Spring system according to claim 1, with automatic follow-up of the magnetic spring's operating point at a displacement of the spring system's operating point marked by the fact that the magnetic spring's (6) component (6a or 6b) that is connected with the shock absorber's outer tube (4) can follow up the magnetic spring's 16) component (6a or 6b respectively) that is motion-coupled with the shock absorber's piston rod (2) and is controlled by the stroke motion of the shock absorber's piston rod (2) which is caused by the displacement of the spring system's operating point.

7. Spring system according to the claims 2 and 6, marked by the fact that the magnetic spring's (6) external component (6b) is shaped as a hollow cylinder (9') that is open at the circumference and guided imperviously to fluid at the interior side of the locating box (14). The hollow cylinder's interior space is wholly closed by the wall of the locating box (14) and subdivided by a separation ring (20) that is firmly connected with the locating box (14) in a upper (21) and a lower (22) subspace. Each subspace is connected through an intake control valve (16 or 17 respectively) and a non-return valve that is locking the influx of pressure fluid (18 or 19 respectively) with a pressure fluid source (25;26), while the final control element that is motion-coupled with the piston rod (2) is serving for the control valves' (16,17) regulation and, in this connection, especially a cam path (23) that is supposed to ba at the sliding tube (12) in the area of a through port of the magnetic spring's internal component (6a) that is running in axial direction (fig. 4 and 5).

8. Spring system according to claim 7, marked by the fact that the cylinder's interior space (25) of the shock absorber (1) is serving as pressure fluid source (fig. 4).

9. Spring system according to claim 7, marked by the fact that a hydraulic pump (26) is serving as pressure fluid source (fig. 5).

10. Spring system according to one of the claims 7 to 9, marked by the fact that the lines (24;24a) to the control valves (16,17) are provided with a throttling effect.

11. Spring system according to one of the claims 1 to 10, marked by the fact that the magnetic spring (6) is having permanent magnets that are magnetized in radial direction, while the internal component's (6a) permanent magnet(s) (8) as well as the external component's (6b) permanent magnet(s) (10) are attached on an interior or outer iron kickback cylinder respectively ( 7 or 9 respectively) (fig. 6 to 11).

12. Spring system according to claim 11, marked by the fact that the permanent magnets (8,10) are attached on elevations (7a,9a) of the iron kickback cylinder (7,9) (fig. 10 and 11).

13. Spring system according to the claims 11 or 12, marked by the fact that the mutual distance of the external component's (6b) permanent magnets (10) is different to the mutual distance of the internal component's (6a) permanent magnets (8).

14. Spring system according to claim 13, marked by the fact that the difference of the magnet distances are chosen so that the magnetic spring's (6) characteristic line is showing a basicly linear power shape almost over the whole spring deflection.

15. Spring system according to one of the claims 11 to 14, marked by the fact that the individual permanent magnets are ring-shaped.

16. Spring system according to one of the claims 11 to 14, where the magnetic spring's magnetic power is adjustable through relative shifting of the magnetic spring's internal and external component, marked by the fact that the individual permanent magnets of the internal component (6a) and the external component (6b) are built as two ring segments (8a, 8b or 10a, 10b respectively) which are facing each other diametrally and which preferably, are in each case essentially extending over a quarter-circle (fig 8 and 9).

## Revendications

1. Le système de suspension pour véhicules se composant d'un ressort porteur avec un taux d'élasticité de ressort positif, d'un ressort magnétique (6) branché en parallèle et agissant en tant que ressort de correction avec un taux d'élasticite de ressort négatif au niveau du passage au neutre de sa constante de ressort ainsi que d'un amortisseur (1) branché en parallèle avec les deux ressorts, à quoi le ressort magnétique (6) est un ressort coaxial se composant d'une partie intérieure (6a) montrant un aimant permanent et étant pour l'essentiel de forme annulaire ou tubulaire, et d'une partie extérieure (6b) entourée de la dernière coaxialement par la formation d'un entrefer (11), montrant un aimant permanent (10) et de forme pour l'essentiel annulaire ou tubulaire.

2. Le système de suspension selon le droit 1, caractérisé par le fait que la pièce intérieure (6a) du ressort magnetique (6) est fixée sur le tube de glissement qui est relié a l'extrémité superieure de la tige de piston de l'amortisseur (2), et qui coulisse sur le tuyau extérieur de l'amortisseur (4), de préférence à la hauteur du piston de l'amortisseur (13).

3. Le système de suspension selon le droit 1, caractérisé par le fait que la partie intérieure (6a) du ressort magnétique (6) est logée directement sur le tuyau extérieur de l'amortisseur (4), de préférence à la hauteur du piston de l'amortisseur (13), tandis que la partie extérieure (6b) du ressort magnétique (6) est fixée à la face intérieure d'un carter d'admission (14a) qui est relié solidement à l'extrémité supérieure de la tige de piston de l'amortisseur (2) et qui coulisse avec le tuyau extérieur de l'amortisseur (4) (fig. 2).

4. Le système de suspension selon le droit 1, caractérisé par le fait que la partie intérieure (6a) du ressort magnétique (6) est logée sur la contre-pièce qui est apposée à l'extrémité supérieure du tuyau extérieur de l'amortisseur (4), et qui entoure la tige de piston de l'amortisseur (2), tandis que la partie extérieure du ressort magnétique (6) fixée à la face intérieure du carter d'admission (14) qui est relié solidement a l'extrémité supérieure de la tige de piston de l'amortisseur (2) et qui coulisse avec le tuyau extérieur de l'amortisseur (4). (fig. 3)

5. Le système de suspension d'après le droit 4, qui est caractérisé par le fait que la partie de réception (15) et le tuyau extérieur de l'amortisseur (4) présentent le même diamètre extérieur (Fig. 3).

6. Le système de suspension selon le droit 1, avec le guidage automatique du point de travail du ressort magnétique lors d'un décalage du point de travail du système de suspension, caractérisé par le fait que la pièce (6a ou 6b) du ressort magnétique (6) reliée au tuyau extérieur de l'amortisseur (4) est guidée par la pièce (6a ou 6b) du ressort magnétique (6) jumelée au mouvement de la tige de piston de l'amortisseur (2) et activée par le mouvement de course de la tige de piston de l'amortisseur engendré par le décalage du point de travail du système de suspension.

7. Le système de suspension selon les droits 2 et 6, caractérisé par le fait que la pièce extérieure (6b) du ressort magnétique (6) est formée comme un cylindre creux (9), ouvert à la circonference, et imperméable à tout fluide à la partie intérieure du carter d'admission (14) et dont l'espace intérieur rempli de fluide sous pression et clos de toute part par la cloison du carter d'admission (14), et séparé en une cellule supérieure (21) et une cellule inférieure (22) par un anneau de séparation (20) fixé au carter d'admission, dont chacune est reliée par une valve de régulation d'admission (16 ou 17) et par un clapet de retour bloquant le courant du fluide sous-pression avec la source du fluide sous pression (25,26) ; pour la commande des valves de régulation (16,17), un organe de commande relié au mouvement de la tige de piston (2), en particulier une chaine à came (23) prévue au tuyau de frottement (12) au niveau d'une entaille toute droite de la partie intérieure du ressort magnétique (6a) est en service. (fig. 4 et 5)

8. Le système de suspension, d'après le droit 7, caractérisé par le fait que l'intérieur du cylindre (25) de l'amortisseur (1) serve de source de fluide sous pression.(fig.4)

9. Le système de suspension selon le droit 7, caractérisé par le fait qu'une pompe hydraulique (26) serve de source de fluide sous pression. (fig. 4)

10. Le système de suspension selon les droits 7a 9, caractérisé par le fait que les adductions (24,24a) aux soupapes de distribution (16, 17) soient pourvues d'une action d'étranglement.

11. Le système de suspension selon un des droits de 1 a 10, caractérisé par le fait que le ressort magnétique (6) possède des aimants permanents magnétisés en direction radiale ; Aussi bien l'(les) aimant(s) permanent(s) de la partie extérieure (6b) que celui (ceux) de la partie intérieure (6a) sont logés sur un cylindre de déduction metallique, intérieur ou extérieur. (fig. 6 a 11)

12. Le système de suspension selon le droit 11, caractérisé par le fait que les aimants permanents (8,10) sont logés sur les relèvements (7a,9a) des cylindres-retour métalliques (7,9).

13. Le système de suspension selon le droit 11 ou 12, caractérisé par le fait que l'écartement réciproque de l'aimant permanent de la pièce extérieure par rapport à l'écartement réciproque de l'aimant permanent de la partie intérieure est différent.

14. Le système de suspension selon le droit 13, caractérisé par le fait que la difference dans l'écartement des aimants est choisie de manière a ce que la ligne caractéristique du ressort magnétique montre dans l'ensemble une course de puissance lineaire, sur presque l'ensemble de la course du ressort.

15. Le système de suspension selon un des droits 11 a 14, caractérisé par le fait que chacun des aimants permanents est de forme annulaire.

16. Le système de suspension selon un des droits 11 à 14, pour lequel la force magnétique du ressort magnétique est réglable par une torsion relative de la partie intérieure et extérieure du ressort magnetique est caractérise par le fait que chacun des aimants permanents de la partie intérieure (6a) et extérieure (6b) est formé comme deux segments circulaires (8a,8b et 10a,10b) se faisant face diamétralement, et s'étendant pour l'essentiel sur un quart de cercle.(fig. 8 et 9)
